Europäisches Patentamt

European Patent Office

Office européen des brevets

(11) Veröffentlichungsnummer: **0 129 703**
**B1**

(12) **EUROPÄISCHE PATENTSCHRIFT**

(45) Veröffentlichungstag der Patentschrift:
23.09.87

(21) Anmeldenummer: **84105715.1**

(22) Anmeldetag: **18.05.84**

(51) Int. Cl.⁴: **A 22 C 11/02**

(54) Verfahren und Vorrichtung zum Abfüllen eines verformbaren und fliessfähigen Füllgutes.

(30) Priorität: **26.05.83 DE 3319139**
**23.02.84 DE 3406605**

(43) Veröffentlichungstag der Anmeldung:
**02.01.85 Patentblatt 85/1**

(45) Bekanntmachung des Hinweises auf die Patenterteilung:
**23.09.87 Patentblatt 87/39**

(84) Benannte Vertragsstaaten:
**AT BE CH DE FR GB IT LI LU NL SE**

(56) Entgegenhaltungen:
**DE-A-2 038 010**
**FR-A-1 350 069**
**FR-A-2 274 223**
**GB-A-862 285**
**US-A-3 108 319**
**US-A-3 166 786**
**US-A-3 189 940**
**US-A-3 334 674**
**US-A-3 537 129**

(73) Patentinhaber: **Firma Heinrich Frey, Fischerstrasse 20, D-7922 Herbrechtingen (DE)**

(72) Erfinder: **Frey, Albert, Fischerstrasse 21, D-7922 Herbrechtingen (DE)**

(74) Vertreter: **Dipl.- Phys.Dr. Manitz Dipl.- Ing., Dipl.- Wirtsch. Finsterwald Dipl.- Chem.Dr. Heyn Dipl.- Phys. Rotermund Morgan, B.Sc.(Phys.), Robert- Koch- Strasse 1, D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung betrifft ein Verfahren zum Abfüllen eines verformbaren und fließfähigen Füllgutes, insbesondere einer Wurstmasse, bei dem das Füllgut zunächst in einen Fülltrichter eingebracht, dann vom Fülltrichter unter Ausnutzung des Differenzdruckes in einen Unterdruck aufweisenden Füllzylinder überführt, anschliessend die Verbindung zwischen Trichter- und Zylinderraum unterbrochen und schließlich das Füllgut durch Verkleinerung des Füllzylinderinnenraumes unter Druck gesetzt und in definierter Weise über ein Füllrohr ausgestoßen wird. Ferner ist die Erfindung auf eine Vorrichtung zur Durchführung dieses Verfahrens gerichtet.

Bei Abfüllmaschinen zum Füllen von Behältern, Tuben, Därmen und dergleichen mit pastösem Gut wird üblicherweise ein zur Aufnahme des jeweiligen Füllgutvorrates bestimmter Zylinder verwendet, dessen Inhalt mittels eines hydraulisch bewegten Preß- oder Füllkolbens über ein Füllrohr portionsweise abgegeben oder in ein bestimmtes Aufnahmevolumen gedrückt wird. Eine Maschine dieser Art ist beispielsweise bekannt aus der DE-B-12 96 076.

Derartige Abfüllmaschinen müssen diskontinuierlich beschickt werden, wodurch einerseits in manchen Fällen störende Einbußen hinsichtlich der Leistungsfähigkeit in Kauf genommen werden müssen und andererseits darauf zu achten ist, daß eine möglichst luftblasenfreie Befüllung des jeweiligen Füllzylinders erreicht wird, da Lufteinschlüsse zu einer Qualitätsverschlechterung des abzufüllenden Gutes führen können und deshalb sehr unerwünscht sind.

Es sind auch bereits kontinuierlich arbeitende Abfüllmaschinen bekannt, wobei das Füllgut dem Füllrohr mittels Förderschnecken, Flügelradförderern und dergl. zugeführt wird.

Nachteilig bei diesen kontinuierlich arbeitenden Maschinen ist vor allem eine relativ große Verschleiß- und Störungsanfälligkeit, eine inhärente Unfallgefahr und vor allem auch das unvermeidbare Auftreten des sog. Schmiereffektes, der darin besteht, daß während des Transports des Füllgutes die Magerteilchen mit Fett verschmiert werden, so daß die abgefüllten Produkte ein undifferenziertes, einen unerwünscht hohen Fettgehalt vorspiegelndes Aussehen erhalten. Die auftretenden Verschleißerscheinungen sind insbesondere deshalb gravierend, weil in der Praxis im Regelfalle nur eine einmalige oder zweimalige Nachstellung möglich ist und dann ein Ersatz der Verschleißteile erfolgen muß, was zu merkbaren Kosten führt. Schließlich läßt bei den kontinuierlich arbeitenden Abfüllmaschinen auch die Entlüftung des Füllgutes insbesondere dann, wenn es sich um schwierig zu entlüftendes Gut handelt, zu wünschen übrig.

Aus der FR-A-1 350 069 ist ein Verfahren zum Abfüllen von Wurstmasse bekannt, bei dem das Füllgut zunächst in einen Fülltrichter eingebracht und mittels einer unterhalb des Fülltrichters angeordneten Förderschnecke in einen ersten Raum transportiert wird, der mittels eines umsteuerbaren Drehschiebers mit einem Füllzylinderraum verbindbar ist. In diesem Füllzylinderraum ist ein Kolben angeordnet, dessen Rückzugsbewegung im Füllzylinderinnenraum einen Unterdruck erzeugt, der bei geöffnetem Drehschieber eine Überführung der Wurstmasse aus dem ersten Raum in den Füllzylinder bewirkt. Wird die Verbindung zwischen dem ersten Raum und dem Füllzylinderraum mittels des Drehschiebers unterbrochen, so kann das Füllgut durch Verkleinerung des Füllzylinderinnenraums mittels des Kolbens unter Druck gesetzt und in definierter Weise über ein Füllrohr ausgestoßen werden.

Auch bei dieser bekannten Vorrichtung treten im Zusammenhang mit dem erforderlichen Schneckenförderer Verschleierscheinungen auf, und es ist praktisch nicht möglich, eine luftblasenfreie Befüllung des Zylinderinnenraums zu erreichen.

Aufgabe der Erfindung ist es, ein Verfahren der eingangs definierten Art in der Weise auszubilden, daß bei praktisch verschleißfreier Arbeitsweise eine hohe Leistung erreicht wird und ein Abfüllen unterschiedlichster Massen bei optimaler Entlüftung und ohne Verschmierungsgefahr möglich ist. Ferner soll die zur Durchführung dieses Verfahrens bestimmte Vorrichtung äußerst einfach aufgebaut und problemfrei zu bedienen sein.

Gelöst wird die gestellte Aufgabe nach der Erfindung dadurch, daß vor Beginn des Überführungsvorganges der Fülltrichter abgeschlossen und im Fülltrichterraum ein vorgebbarer Unterdruck geschaffen und bei im Fülltrichterraum herrschendem Unterdruck das Füllgut bewegt, insbesondere gerührt wird.

Auf diese Weise wird eine weitestgehende Beseitigung von Oberflächenluft und Gefügeluft bereits im Fülltrichter sichergestellt. Auch bei der unmittelbaren Überführung des Füllgutes vom Fülltrichterraum in den Füllzylinderraum wirkt sich das vor Beginn des Überführungsvorganges erfolgende Verschließen des Fülltrichters und die Schaffung eines vorgebbaren Unterdrucks im Fülltrichterraum vorteilhaft aus, da auf diese Weise die Druckdifferenz zwischen Fülltrichterraum und Füllzylinderraum auf einfache und bestimmte Weise vorgegeben werden kann und damit eine sehr schonende Überführung des Füllgutes in den Füllzylinder erreichbar ist.

Da der Befüllvorgang innerhalb sehr kurzer Zeit vor sich geht und praktisch während der Zeitspanne erfolgen kann, die zum Aufziehen eines Befülldarmes auf das Füllrohr benötigt wird, kann trotz des Fehlens einer umlaufenden Fördervorrichtung ein nahezu kontinuierlicher Betrieb sichergestellt werden.

Der Umwälz- bzw. Rührvorgang im Fülltrichter wird bevorzugt in der Weise durchgeführt, daß das Füllgut unter Vergleichmäßigung der Fließfähigkeit in Richtung des Fülltrichterauslaßes bewegt bzw. gefördert wird, wodurch ein eventuelles Auftreten eines den Füllguttransport behindernden Durchzugslochs vermieden, die Druckdifferenz aufrechterhalten und somit der angestrebte schnelle und sichere Transport des gesamten Füllgutes in den Füllzylinder gewährleistet wird.

Eine bevorzugte Vorrichtung zur Durchführung des erfindungsgemäßen Verfahrens besteht aus einem Fülltrichter, einem mit dem Auslaß des Fülltrichters in Verbindung stehenden Füllzylinder, einer zwischen Fülltrichter und Füllzylinder vorgesehenen Absperrvorrichtung, mindestens einer Füllzylinder-Ausstoßöffnung und einem Füllkolben, der in Abhängigkeit von einer steuerbaren Druckbeaufschlagung jeweils der auszustossenden Menge entsprechende Hubbewegungen ausführt, und die Besonderheit dieser Vorrichtung besteht dabei darin, daß der Fülltrichter mit einem einen zumindest im wesentlichen luftdichten Abschluß gewährleistenden Verschließorgan versehen ist, das vorzugsweise aus einem aufschwenk- und/oder abnehmbaren Deckel besteht, und mit einem Unterdruckanschluß versehen ist.

Bevorzugt sind Fülltrichter und Füllzylinder mit der gleichen Unterdruckquelle verbunden und insbesondere auch mit einem Vakuum-Regelventil ausgestattet, wodurch es problemfrei möglich ist, die gewünschte, den Füllguttransport bewirkende Druckdifferenz einzustellen.

Ein im Fülltrichter vorgesehenes Rührwerk ist bevorzugt in der Art ausgebildet, daß die Konsistenz und Fließfähigkeit der Masse vergleichmäßigt wird und während des Rührvorganges ein Wandabstreifeffekt auftritt, der eine weitgehende Selbstreinigung des Fülltrichters zur Folge hat.

Die Absperrvorrichtung zwischen Fülltrichter und Füllzylinder besteht bevorzugt aus einem geradlinig bewegbaren Schieber, der die von dem Differenzdruck herrührenden Kräfte problemfrei aufnehmen kann.

Die Vakuumsteuerung kann sowohl über ein Ventil erfolgen als auch vom Verhältnis Füllinhalt zu Masse gesteuert werden, wodurch sich die Überführungsgeschwindigkeit für das Füllgut automatisch ergibt.

Die Erfindung wird nachfolgend anhand von Ausführungsbeispielen unter Bezugnahme auf die Zeichnung näher erläutert; in der Zeichnung zeigt

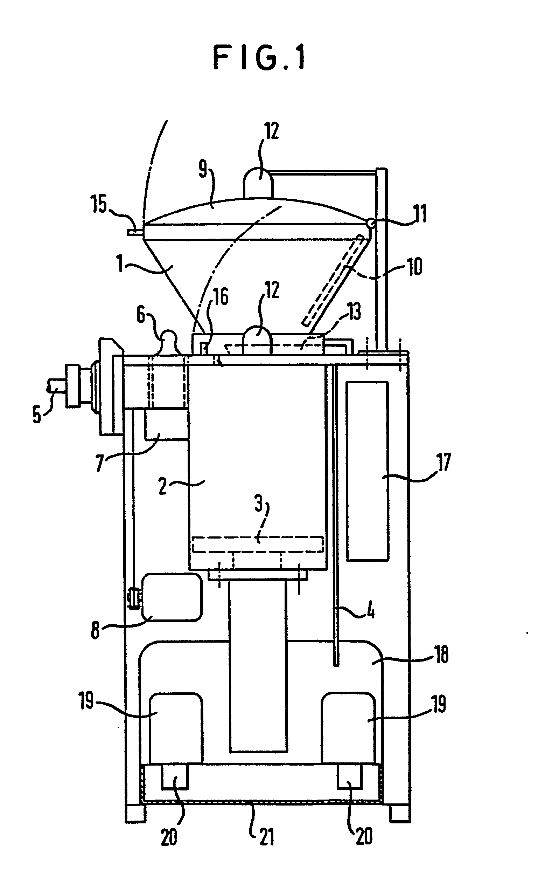

Fig. 1 eine schematische Darstellung einer Vakuum-Füllmaschine nach der Erfindung,

Die in Fig. 1 gezeigte Vakuum-Füllmaschine umfaßt einen Fülltrichter 1, einen unterhalb des Fülltrichters in einer geeigneten Rahmenkonstruktion angeordneten Füllzylinder 2, der mit dem Fülltrichter 1 über einen Durchlaß verbunden ist, welcher mittels eines Schiebers 13 versperrbar ist.

Fülltrichter 1 und Füllzylinder 2 sind koaxial angeordnet, und die Durchlaßöffnung ist bevorzugt mittig gelegen.

Im Füllzylinder 2 ist ein Kolben 3 angeordnet, der in Abhängigkeit von einer steuerbaren Druckbeaufschlagung jeweils der auszustoßenden Menge entsprechende Hubbewegungen ausführt. Außerdem kann dieser Kolben 3 durch seine Absenkbewegung zur Vakuumerzeugung im Füllzylinderraum benutzt werden.

Die Bewegung des Kolbens 3 während der Ausstoßvorgänge wird bevorzugt mittels einer aus einem Meßstab bestehenden Meßeinheit 4 erfaßt und zu Steuerzwecken verwendet.

Der Innenraum des Füllzylinders 2 steht über ein Portionierküken 6 und einen Schieber 7 mit einem Füllrohrauslauf 5 in Verbindung. Ein Abdrehmotor 8 ist in herkömmlicher Weise vorgesehen und schematisch dargestellt.

Im Fülltrichter 1 ist ein steuerbares Rührwerk 10 mit Abstreifer vorgesehen. Durch dieses Rührwerk, das bei Beginn des Entlüftungsvorganges in Lauf gesetzt werden kann, wird aus dem jeweiligen Füllgut Oberflächenluft und Gefügeluft beseitigt. Der zum Rührwerk gehörende Abstreifer bzw. Schaber transportiert das Füllgut stets in Richtung der Trichtermitte und gewährleistet eine saubere Wandung, was wiederum den Reinigungsvorgang stark vereinfacht und einen wesentlichen Vorteil im Vergleich zu den komplizierten Rührwerken von kontinuierlich arbeitenden Maschinen darstellt.

Der Fülltrichter 1 ist mittels eines aufklappbar angebrachten Deckels 9 zumindest im wesentlichen luftdicht verschließbar, wodurch ein gezielter Differenzdruck zwischen Fülltrichterraum und Füllzylinderraum aufgebaut werden kann. Im Übergangsbereich von Trichter und Deckel ist ein Sicherheitsschalter vorgesehen, außerdem sind Vakuum-Schaugläser 12 im Trichter- und Zylinderbereich vorhanden.

Sowohl im Fülltrichter 1 als auch im Füllzylinder 2 ist der jeweils herrschende Druck regelbar, wozu vorzugsweise entsprechende Regelventile 15, 16 vorgesehen sind.

Die den Füllzylinder 2 aufnehmende und auch den Fülltrichter tragende Rahmenkonstruktion umgibt ferner eine für derartige Maschinen übliche Elektronik 17, eine Vakuumpumpe 18, einen Elektromotor 19 sowie eine Ölpumpe 20 und eine Ölwanne 21.

Die beschriebene Füllmaschine arbeitet wie folgt:

Nach dem Befüllen des Trichters 1 wird der Deckel 9 geschlossen. Vorzugsweise wird nach dem Schließen des Deckels im Fülltrichter 1 ein Vakuum geschaffen, dessen Höhe in Abhängigkeit vom jeweiligen Füllgut gewählt wird. Es wird dann das Rührwerk 10 in Betrieb gesetzt, d.h. es beginnt der Entlüftungsvorgang, bei dem Oberflächenluft und Gefügeluft weitestgehend beseitigt wird.

Im Füllzylinder 2 wird der Kolben 3 abgesenkt und ein solches Vakuum geschaffen, daß sich der für die Überführung des Füllguts vom Fülltrichter in den Füllzylinder benötigte Differenzdruck ergibt. Durch die Einstellung dieses Differenzdruckes wird die Transportgeschwindigkeit des Füllguts auf dem Weg vom Fülltrichter zum Füllzylinder festgelegt.

Das Rührwerk 10 stellt sicher, daß beim Öffnen des Schiebers 13 kein Durchzugsloch entsteht und demgemäß ein kontinuierlicher, relativ schnell vor sich gehender und vollständiger Überführungsvorgang stattfindet. Wenn das Füllgut in den Füllzylinderraum eintritt, spritzt es auseinander, wodurch Rest-Gefügeluft frei wird und sofort abgezogen werden kann.

Nach erfolgter Überführung des Füllguts in den Füllzylinder 2 wird der Schieber 13 wieder geschlossen und der Kolben 3 nach oben gefahren, um einen ausreichend hohen Druck zu erzeugen, der verhindert, daß über den Abfüllstutzen ein Ansaugvorgang erfolgt. Die Absaugung wird geschlossen und der gewünschte Anfangsdruck in der Füllmasse eingestellt. Anschließend kann der Abfüllvorgang beginnen.

Während der Durchführung des Abfüllvorganges, der in bekannter Weise erfolgt, kann der Fülltrichter 1 bereits wieder beschickt werden und es können sofort anschließend die Vorgänge des Unterdruckaufbaus und des Entlüftens bei laufendem Rührwerk durchgeführt werden.

Die Möglichkeit der Einstellung des Luftgehalts der Füllmasse im Trichterbereich wirkt sich insofern auch günstig aus, als dadurch eine Anpassung an dicht komprimierte Würste und weniger dicht komprimierte Würst erfolgen kann.

Ganz wesentlich ist, daß durch den erfindungsgemäß durchgeführten Transport des Füllguts vom Trichter in den Füllzylinder kein Verschmieren der Masse erfolgt und somit Wurstsorten mit hohem Fettgehalt ein perfektes Füllbild bieten, wie es nur mittels einer Kolbenabfüllung erzielbar ist.

Es wurde bereits darauf hingewiesen, daß bei der Vorrichtung nach der Erfindung das Füllgut praktisch verschmierungsfrei abgefüllt werden kann, da im Gegensatz zu kontinuierlich arbeitenden Maschinen die Transport- und Führungskanäle äußerst kurz sind. Dadurch wird auch bei grober Ware ein ausgezeichnetes Wurstbild erreicht. Diejenigen Bereiche der Maschine, durch die das Gut strömt, insbesondere Schieber 13 und Füllrohr 5 können innen noch mit einem speziellen Gleitmaterial, insbesondere Silikon, beschichtet sein, was sich in der Praxis ebenfalls vorteilhaft auswirkt.

**Patentansprüche**

1. Verfahren zum Abfüllen eines verformbaren und fließfähigen Füllgutes, insbesondere einer Wurstmasse, bei dem das Füllgut zunächst in einen Fülltrichter (1) eingebracht, dann vom Fülltrichter (1) unter Ausnutzung des Differenzdruckes in einen Unterdruck aufweisenden Füllzylinder (2) überführt, anschließend die Verbindung zwischen Trichter- und Zylinderraum unterbrochen und schließlich das Füllgut durch Verkleinerung des Füllzylinderinnenraums unter Druck gesetzt und in definierter Weise über ein Füllrohr (5) ausgestoßen wird,

dadurch gekennzeichnet,

daß vor Beginn des Überführungsvorganges der Fülltrichter (1) abgeschlossen und im Fülltrichterraum ein vorgebbarer Unterdruck geschaffen und bei im Fülltrichterraum herrschendem Unterdruck das Füllgut bewegt, insbesondere gerührt wird.

2. Verfahren nach Anspruch 1, dadurch gekennzeichnet, daß während des Überführungsvorganges des Füllgutes vom Fülltrichter (1) in den Füllzylinder (2) im Fülltrichter ein das Füllgut zur Mitte des Fülltrichters verlagernder Rührvorgang durchgeführt wird.

3. Verfahren nach Anspruch 1 oder 2, dadurch gekennzeichnet, daß die Befüllung des Fülltrichters und/oder die Unterdruckerzeugung im Fülltrichterraum während der Phase des Ausstoßens des Füllgutes durch das Füllrohr (5) vorgenommen wird.

4. Vorrichtung zur Durchführung des Verfahrens nach einem der vorhergehenden Ansprüche, bestehend aus einem Fülltrichter (1), einem mit dem Auslaß des Fülltrichters in Verbindung stehenden Füllzylinder (2), einer zwischen Fülltrichter und Füllzylinder vorgesehenen Absperrvorrichtung (13), mindestens einer Füllzylinder-Ausstoßöffnung (5) und einem Füllkolben (3), der in Abhängigkeit von einer steuerbaren Druckbeaufschlagung jeweils der auszustoßenden Menge entsprechende Hubbewegungen ausführt, dadurch gekennzeichnet, daß der Fülltrichter (1) mit einem einen zumindest im wesentlichen luftdichten Abschluß gewährleistenden, insbesondere aus einem aufschwenk- und/oder abnehmbaren Deckel bestehenden Verschließorgan (9) und einem Unterdruckanschluß (15) versehen ist.

5. Vorrichtung nach Anspruch 4, dadurch gekennzeichnet, daß der Fülltrichter (1) und/oder der Füllzylinder (2) mit einem Vakuum-Regelventil (15, 16) ausgestattet ist bzw. sind.

6. Vorrichtung nach Anspruch 4, dadurch gekennzeichnet, daß im Fülltrichter (1) ein steuerbares Rührwerk (10) mit Wandabstreifer vorgesehen ist und daß der Fülltrichter (1) aufschwenkbar und/oder abnehmbar ist.

7. Vorrichtung nach Anspruch 4, dadurch gekennzeichnet, daß die Absperrvorrichtung (13) zwischen Fülltrichter (1) und Füllzylinder (2) als geradlinig geführter Schieber (13) ausgebildet ist.

8. Vorrichtung nach einem der vorhergehenden Ansprüche, dadurch gekennzeichnet, daß zumindest die vom Füllgut durchströmten Teile mit einer Innenbeschichtung von Kunststoffmaterial, insbesondere Silikon, versehen sind.

## Claims

1. A method of dispensing a deformable and flowable filling material, in particular sausage meat, wherein the filling material is first introduced into a filling funnel (1) wherein the filling material is then transferred from the filling funnel (1) into a filling cylinder (2) at a reduced pressure by exploiting the pressure difference, wherein the connection between the funnel space and the chamber of the cylinder is then interrupted, and wherein the filling material is then set under pressure by making the inner chamber of the filling cylinder smaller and is expelled in defined manner via a dispensing tube (5), characterised in that the filling funnel (1) is closed prior to the start of the transfer process, and in that a predeterminable reduced pressure is provided in the filling funnel space and the filling material is moved, and in particular stirred, while reduced pressure prevails in the filling funnel space.

2. A method in accordance with claim 1, characterized in that during the transfer of the filling material from the filling funnel (1) into the filling cylinder (2) a stirring process is carried out in the filling funnel which moves the filling material towards the center of the filling funnel.

3. A method in accordance with claim 2, characterised in that the charging of the filling funnel and/or the generation of reduced pressure in the filling funnel space takes place during the phase when the filling material is being expelled through the dispensing tube (5).

4. Apparatus for carrying out the method of claim 1, the apparatus comprising a filling funnel (1), a filling cylinder (2) communicating with the outlet of the filling funnel, a closure device (13) provided between the filling funnel and the filling cylinder, at least one filling cylinder expulsion opening (5), and a filling piston (3) which executes strokes each corresponding to the quantity of filling material to be expelled in dependence on the controllable application of pressure, characterised in that the filling funnel (1) is provided with a closure member (9), which consists in particular of an upwardly pivotable and/or removable cover which ensures an at least substantially air-tight closure of the filling funnel, and a connection (15) for pressure reduction.

5. Apparatus in accordance with claim 4, characterised in that the filling funnel (1) and/or the filling cylinder (2) is or are equipped with a vacuum regulating valve (15, 16).

6. Apparatus in accordance with claim 4, characterised in that a controllable stirrer (10) with a wall scraper is provided in the filling funnel (1); and in that the filling funnel (1) is pivotably and/or removably mounted.

7. Apparatus in accordance with claim 4, characterised in that the closure device (13) between the filling funnel (1) and the filling cylinder (2) is constructed as a slider (13) which is guided for straightline movement.

8. Apparatus in accordance with one of the preceding claims, characterised in that at least the parts through which the filling material flows are provided with an internal coating of synthetic material, in particular silicone.

## Revendications

1. Procédé de remplissage avec un produit de remplissage déformable et susceptible d'écoulement, en particulier une chair à saucisse, suivant lequel le produit de remplissage est d'abord introduit dans un entonnoir de remplissage (1), puis est transféré depuis l'entonnoir de remplissage (1), en utilisant la différence de pression, dans un cylindre de remplissage (2) présentant une dépression, après quoi la liaison entre les volumes d'entonnoir et de cylindre est interrompue et finalement le produit de remplissage est mis sous pression en réduisant le volume interne du cylindre de remplissage et est éjecté de manière définie, par l'intermédiaire d'un tube de remplissage (5), caractérisé en ce qu'avant le début de l'opération de transfert, l'entonnoir de remplissage (1) est obturé et une dépression prédéterminée est établie dans le volume d'entonnoir de remplissage, et sous la dépression régnant dans le volume d'entonnoir de remplissage, le produit de remplissage est déplacé, en particulier mélangé.

2. Procédé suivant la revendication 1, caractérisé en ce que pendant l'opération de transfert du produit de remplissage de l'entonnoir de remplissage (1) dans le cylindre de remplissage (2), une opération de mélange est exécutée dans l'entonnoir de remplissage, ramenant le produit de remplissage vers le milieu de l'entonnoir de remplissage.

3. Procédé suivant la revendication 1 ou 2, caractérisé en ce que le remplissage de l'entonnoir de remplissage et/ou la production d'une dépression dans le volume d'entonnoir de remplissage est effectuée pendant la phase d'éjection du produit de remplissage à travers le tube de remplissage (5).

4. Dispositif pour la mise en oeuvre du procédé suivant l'une des revendications précédentes, constitué par un entonnoir de remplissage (1), un cylindre de remplissage (2) se trouvant en liaison avec la sortie de l'entonnoir de remplissage, un dispositif d'isolement (13) prévu entre l'entonnoir de remplissage et le cylindre de remplissage, au moins une ouverture d'éjection (5) de cylindre de remplissage et un piston de remplissage (3), qui exécute en fonction d'une sollicitation de pression commandée, des mouvements de course correspondant à chaque fois à la quantité à éjecter, caractérisé en ce que l'entonnoir de remplissage (1) est doté d'un organe de fermeture (9) assurant une obturation au moins essentiellement étanche à l'air, constitué en particulier par un couvercle rabattable et/ou amovible, et d'un raccord à dépression (15).

5. Dispositif suivant la revendication 4, caractérisé en ce que l'entonnoir de remplissage (1) et/ou le cylindre de remplissage (2) sont équipés d'une soupape de réglage de vide (15, 16).

6. Dispositif suivant la revendication 4, caractérisé en ce que dans l'entonnoir de remplissage (1) est prévu un mécanisme mélangeur commandé (10) avec racleur de paroi, et en ce que l'entonnoir de remplissage (1) peut être écarté par pivotement et/ou est amovible.

7. Dispositif suivant la revendication 4, caractérisé en ce que le dispositif d'isolement (13) entre l'entonnoir de remplissage (1) et le cylindre de remplissage (2) est réalisé en tant que tiroir (13) à guidage linéaire.

8. Dispositif suivant l'une des revendications précédentes, caractérisé en ce qu'au moins les pièces parcourues par le produit de remplissage sont dotées d'un revêtement interne en matière synthétique, en particulier du silicone.

# FIG.1